(19) Europäisches Patentamt
European Patent Office
Office européen des brevets

(11) **EP 3 306 588 A2**

(12) **EUROPEAN PATENT APPLICATION**

(43) Date of publication:
**11.04.2018 Bulletin 2018/15**

(51) Int Cl.:
**G08G 1/01** *(2006.01)*          **G08G 1/04** *(2006.01)*
**G08G 1/052** *(2006.01)*

(21) Application number: **17189825.7**

(22) Date of filing: **07.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.09.2016 JP 2016182014**

(71) Applicants:
• **KABUSHIKI KAISHA TOSHIBA**
**Minato-ku**
**Tokyo**
**105-8001 (JP)**
• **Toshiba Infrastructure Systems & Solutions Corporation**
**Kawasaki-shi, Kanagawa 212-8585 (JP)**

(72) Inventors:
• **Suzuki, Yoshihiko**
**Tokyo, 105-8001 (JP)**
• **Sato, Toshio**
**Tokyo, 105-8001 (JP)**
• **Ueno, Hideki**
**Kanagawa, 212-8585 (JP)**
• **Takahashi, Yusuke**
**Tokyo, 105-8001 (JP)**
• **Ooba, Yoshikazu**
**Tokyo, 105-8001 (JP)**
• **Aoki, Yasuhiro**
**Tokyo, 105-8001 (JP)**
• **Sakai, Hiroshi**
**Kanagawa, 212-8581 (JP)**

(74) Representative: **Hoffmann Eitle**
**Patent- und Rechtsanwälte PartmbB**
**Arabellastraße 30**
**81925 München (DE)**

(54) **TRAVEL SPEED CALCULATION DEVICE AND TRAVEL SPEED CALCULATION METHOD**

(57)      According to one embodiment, a travel speed calculation device includes an acquisition unit, an inter-vehicle distance calculator, a relative speed calculator, a travel speed calculator, and a determination unit. The travel speed calculator calculates a travel speed of another vehicle based on a travel speed of a probe vehicle and a relative speed of another vehicle relative to the probe vehicle. The determination unit determines change of another vehicle based on a frame at a former time and a frame at a latter time, and inhibits the travel speed calculator from calculating a travel speed of another vehicle based on a relative speed in the case where another vehicle is changed.

FIG.4

START

EXECUTE IMAGE PROCESSING AND CALCULATE INTER-VEHICLE DISTANCE — S401

DETERMINE WHETHER ANOTHER VEHICLE IS CHANGED — S402

IS ANOTHER VEHICLE CHANGED? — S403   YES / NO

SAVE CALCULATION RESULT OF RELATIVE SPEED — S404

HAS ABSOLUTE SPEED CALCULATION PERIOD ELAPSED? — S405   NO / YES

CALCULATE AVERAGE OF RELATIVE SPEEDS — S406

ACQUIRE TRAVEL SPEED OF PROBE VEHICLE — S407

CALCULATE ABSOLUTE SPEED — S408

SAVE ABSOLUTE SPEED AND TIME IN STORAGE — S409

END

# Description

## FIELD

Embodiments described herein relate generally to a travel speed calculation device and a travel speed calculation method.

## BACKGROUND

There is a probe vehicle directed to executing image processing for a captured image obtained by imaging a preceding vehicle by an imaging unit, measuring an inter-vehicle distance between an own vehicle and the preceding vehicle, and performing estimation of traffic condition and drive assistance based on a measurement result of the inter-vehicle distance.

In this probe vehicle, the inter-vehicle distance from the preceding vehicle traveling in a lane same as a lane where the own vehicle travels is measured, and a traffic volume is estimated from the inter-vehicle distance. Therefore, in the case where a traffic volume is different in each lane, there is a method of estimating the traffic volume in each lane by changing a lane where the probe vehicle travels in every constant period, but since a time and a range for which a traffic volume can be estimated are limited, reliability of an estimation result on the traffic volume may be degraded. Also, in this case, it is necessary to make the probe vehicle travel in each lane, thereby increasing a cost.

## BRIEF DESCRIPTION OF THE DRAWING

FIG. 1 is a diagram illustrating an exemplary structure of a cockpit of a probe vehicle according to the present embodiment;
FIG. 2 is a block diagram illustrating an exemplary functional configuration of an in-vehicle device included in the probe vehicle according to the present embodiment;
FIG. 3 is an explanatory diagram for an exemplary calculation processing of a relative speed performed by the in-vehicle device of the probe vehicle according to the present embodiment;
FIG. 4 is a flowchart illustrating an exemplary flow of absolute speed calculation processing for another vehicle by the in-vehicle device according to the present embodiment;
FIG. 5 is a flowchart illustrating an exemplary flow of determination processing on change of another vehicle, performed by the in-vehicle device according to the present embodiment;
FIG. 6 is an explanatory diagram for the exemplary determination processing on change of another vehicle, performed by the in-vehicle device according to the present embodiment; and

FIG. 7 is an explanatory diagram for an exemplary determination processing on change of another vehicle, performed by an in-vehicle device according to the present embodiment.

## DETAILED DESCRIPTION

In general, according to one embodiment, a travel speed calculation device includes an acquisition unit, an inter-vehicle distance calculator, a relative speed calculator, a travel speed calculator, and a determination unit. The acquisition unit acquires probe information including: a moving image obtained by imaging a periphery of a probe vehicle by an imaging unit included in the probe vehicle; and a travel speed of the probe vehicle. The inter-vehicle distance calculator calculates, based on a frame constituting the moving image, an inter-vehicle distance between the probe vehicle and another vehicle traveling in another lane adjacent to a lane where the probe vehicle travels. The relative speed calculator calculates a relative speed of another vehicle relative to the probe vehicle based on: a former inter-vehicle distance calculated based on a frame at former time; and a latter inter-vehicle distance calculated based on a frame at latter time after elapse of a predetermined period from the former time. The travel speed calculator calculates a travel speed of another vehicle based on the travel speed of the probe vehicle and the relative speed. The determination unit determines change of another vehicle based on the frame at the former time and the frame at the latter time, and inhibits the travel speed calculator from calculating a travel speed of another vehicle based on a relative speed in the case where another vehicle is changed.

In the following, a probe vehicle adopting a travel speed calculation device and a travel speed calculation method according to the present embodiment will be described using the accompanying drawings.

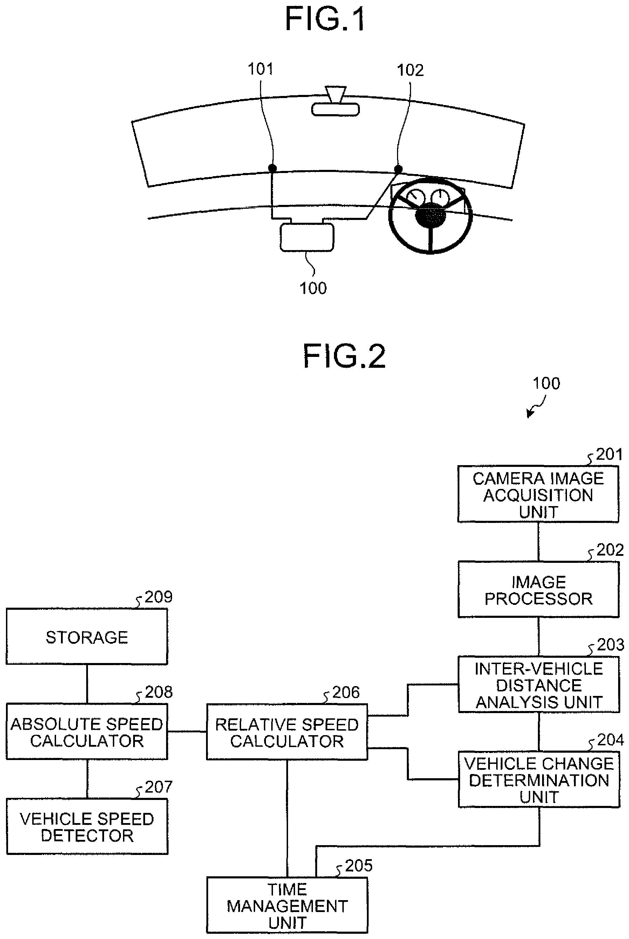

FIG. 1 is a diagram illustrating an exemplary structure of a cockpit of a probe vehicle according to the present embodiment. As illustrated in FIG. 1, the probe vehicle according to the present embodiment includes an in-vehicle device 100 and imaging units 101 and 102. The imaging units 101 and 102 are provided in a manner capable of imaging another vehicle and the like traveling in front of the probe vehicle from different angles. In the present embodiment, the imaging units 101 and 102 are provided symmetrically with respect to a center console of the probe vehicle.

The in-vehicle device 100 functions as a control device to control the entire probe vehicle. Additionally, the in-vehicle device 100 calculates, based on captured images obtained by imaging by the imaging units 101 and 102, a travel speed of another vehicle traveling in another lane adjacent to a lane where the probe vehicle travels, and transmits a calculation result or the like of the travel speed of concerned another vehicle to an external device such as a center server. The external device such as the center server estimates, based on the travel speed or the like of another vehicle received from the probe vehicle, a traffic volume of another lane or the like adjacent to a lane where the probe vehicle travels.

FIG. 2 is a block diagram illustrating an exemplary functional configuration of an in-vehicle device included in the probe vehicle according to the present embodiment. As illustrated in FIG. 2, in the present embodiment, the in-vehicle device 100 includes a camera image acquisition unit 201, an image processor 202, an inter-vehicle distance analysis unit 203, a vehicle change determination unit 204, a time management unit 205, and a relative speed calculator 206, a vehicle speed detector 207, an absolute speed calculator 208, and a storage 209.

The camera image acquisition unit 201 acquires captured images (moving images) obtained by imaging by the imaging units 101 and 102. The vehicle speed detector 207 detects a travel speed of the probe vehicle. In the present embodiment, the camera image acquisition unit 201 and the vehicle speed detector 207 function as acquisition units to acquire: moving images obtained by imaging by the imaging units 101 and 102; and probe information including a travel speed of the probe vehicle.

In the present embodiment, the vehicle speed detector 207 acquires a travel speed of the probe vehicle from an engine control unit (ECU) mounted on the probe vehicle and adapted to control traveling of the probe vehicle. Alternatively, the vehicle speed detector 207 may also detect a travel speed of the probe vehicle based on a position of the probe vehicle (for example, a longitude and a latitude at a position where the probe vehicle travels) identified based on a global positioning system (GPS) signal received by a GPS receiver included in an in-vehicle apparatus provided in the probe vehicle. Alternatively, the vehicle speed detector 207 may also acquire a travel speed of the probe vehicle calculated by a car navigation system provided in the probe vehicle.

The image processor 202 performs image processing for a frame constituting a moving image acquired by the camera image acquisition unit 201, and detects a lane and a vehicle included in the frame. The inter-vehicle distance analysis unit 203 calculates an inter-vehicle distance between the probe vehicle and another vehicle that travels in another lane (hereinafter referred to as an adjacent lane) adjacent to a lane where the probe vehicle travels (hereinafter referred to as an own lane) based on the lane and the vehicle detected by the image processor 202 from each frame. In other words, in the present embodiment, the image processor 202 and the inter-vehicle distance analysis unit 203 function as exemplary inter-vehicle distance calculators adapted to calculate an inter-vehicle distance based on a frame constituting a moving image. The time management unit 205 acquires time when each of frames is obtained by imaging by each of the imaging units 101 and 102.

In the present embodiment, the image processor 202 and the inter-vehicle distance analysis unit 203 may image, by a stereo camera, another vehicle in front of the probe vehicle and existing in an adjacent lane fitted within a view angle, and calculate an inter-vehicle distance from another vehicle. Alternatively, either one of the imaging unit 101 and the imaging unit 102 (monocular camera) may image another vehicle in front of the probe vehicle and existing in the adjacent lane fitted within a view angle, and acquire an inter-vehicle distance from another vehicle. Alternatively, an imaging unit provided in a manner capable of imaging another vehicle existing in the adjacent lane (imaging unit capable of imaging a diagonally front side, a lateral side, and a diagonally back side of the probe vehicle) is provided in addition to the imaging units 101 and 102 provided in a manner capable of imaging the front side of the probe vehicle, and the inter-vehicle distance from another vehicle may be calculated based on a frame included in a moving image obtained by this imaging unit. Alternatively, the inter-vehicle distance from another vehicle may also be calculated based on a frame constituting a moving image obtained by a 360-degree camera (entire circumference camera) without using an imaging unit oriented in a specific direction.

The relative speed calculator 206 calculates a relative speed of another vehicle relative to the probe vehicle based on an inter-vehicle distance calculated based on a frame at former time out of frames constituting a moving image (hereinafter referred to as former inter-vehicle distance) and an inter-vehicle distance calculated based on a frame after a predetermined period (e.g., 100 msec) from the former time (hereinafter referred to as latter inter-vehicle distance). The absolute speed calculator 208 (an example of a travel speed calculator) calculates a travel speed of another vehicle (hereinafter referred to as an absolute speed) based on a travel speed of the probe vehicle detected by the vehicle speed detector 207 and a relative speed calculated by the relative speed calculator 206. In the present embodiment, the absolute speed calculator 208 calculates, as an absolute speed of another vehicle, a speed obtained by adding the relative speed to the travel speed of the probe vehicle.

The vehicle change determination unit 204 (an example of a determination unit) determines change of another vehicle based on a frame at the former time and a frame at latter time. Subsequently, in the case of determining that another vehicle is changed, the vehicle change determination unit 204 inhibits the absolute speed calculator 208 from calculating an absolute speed of another vehicle based on a relative speed calculated based on a former inter-vehicle distance and a latter inter-vehicle distance. Consequently, since calculating an absolute speed of another vehicle based on an inter-vehicle distance from a different another vehicle can be prevented, calculation accuracy of the absolute speed of another vehicle can be improved.

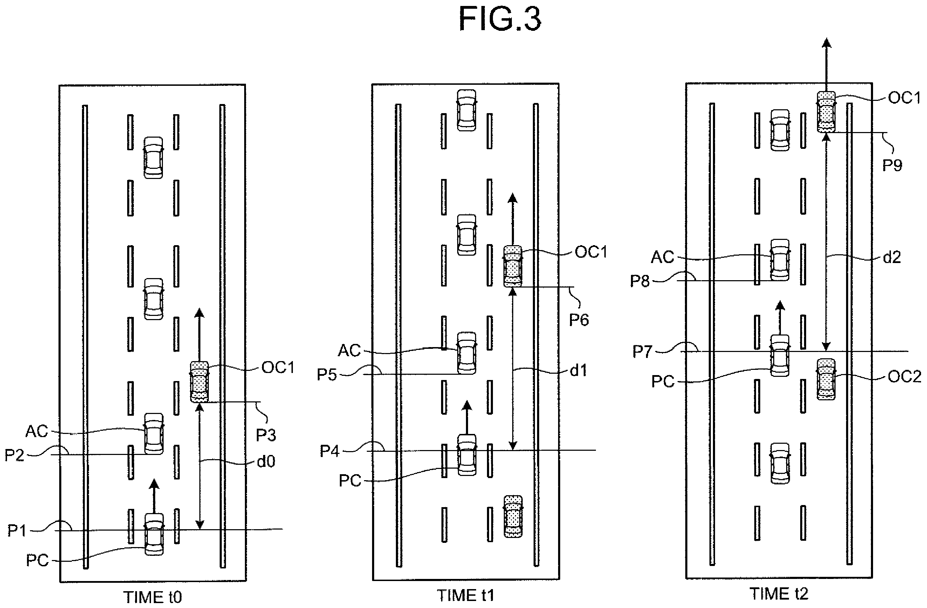

Next, relative speed calculation processing performed by the in-vehicle device 100 included in the probe vehicle according to the present embodiment will be described using FIG. 3. FIG. 3 is an explanatory diagram for an exemplary calculation processing of a relative speed performed by the in-vehicle device of the probe vehicle according to the present embodiment.

As illustrated in FIG. 3, at time t0, a probe vehicle PC travels at a position P1, a preceding vehicle AC travels at a position P2 more ahead of the position P1 on an own lane where the probe vehicle PC travels, and another vehicle OC1 travels at a position P3 more ahead of the position P1 in an adjacent lane (another lane adjacent to a right side of the own lane where the probe vehicle PC travels in the example illustrated in FIG. 3). Furthermore, as illustrated in FIG. 3, the probe vehicle PC travels at a position P4 at time t1 after the predetermined period (100 msec) from the time t0, and the preceding vehicle AC travels at a position P5 more ahead of the position P4 in the own lane where the probe vehicle PC travels, and another vehicle OC1 travels at a position P6 more ahead of the position P4 in the adjacent lane. Additionally, as illustrated in FIG. 3, the probe vehicle PC travels at a position P7 at time t2 after the predetermined period (100 msec) from the time t1, and the preceding vehicle AC travels at a position P8 more ahead of the position P7 in the own lane where the probe vehicle PC travels, and another vehicle OC1 travels at a position P9 more ahead of the position P7 in the adjacent lane.

The inter-vehicle distance analysis unit 203 calculates an inter-vehicle distance d0 between the probe vehicle PC traveling at the position P1 and another vehicle OC1 traveling at the position P3 based on a frame at the time t0. Additionally, the inter-vehicle distance analysis unit 203 calculates an inter-vehicle distance d1 between the probe vehicle PC traveling at the position P4 and another vehicle OC1 traveling at the position P6 based on a frame at the time t1. Here, in the case where another vehicle OC1 traveling at the position P3 at the time t0 and another vehicle OC1 traveling at the position P6 at the time t1 are the same vehicle, the relative speed calculator 206 can calculate a relative speed V (m/sec) between the probe vehicle PC and another vehicle OC1 in accordance with a following formula (1).

$$V=(d1-d0)/(t1-t0)\cdots(1)$$

Therefore, the relative speed calculator 206 calculates an absolute speed v2 of another vehicle OC1 at the time t1 by adding the relative speed V to a travel speed v1 of the probe vehicle PC at the time t0 in accordance with a following formula (2).

$$v2=v1+((d1-d0)/(t1-t0))\cdots(2)$$

Additionally, the inter-vehicle distance analysis unit 203 calculates the inter-vehicle distance d1 between the probe vehicle PC traveling at the position P4 and another vehicle OC1 traveling at the position P6 based on the frame at the time t1. Furthermore, the inter-vehicle distance analysis unit 203 calculates an inter-vehicle distance d2 between the probe vehicle PC traveling at the position P7 and another vehicle OC1 traveling at the position P9 based on a frame at the time t2. Here, in the case where another vehicle OC1 traveling at the position P6 at the time t1 and another vehicle OC1 traveling at the position P9 at the time t2 are the same vehicle, the relative speed calculator 206 calculates the relative speed V (m/sec) between the probe vehicle PC and another vehicle OC1 in accordance with a following formula (3).

$$V=(d2-d1)/(t2-t1)\cdots(3)$$

Therefore, the relative speed calculator 206 calculates an absolute speed v4 of another vehicle OC1 at the time t2 by adding the relative speed V to a travel speed v3 of the probe vehicle PC at the time t1 in accordance with a following formula (4).

$$v4=v3+((d2-d1)/(t2-t1))\cdots(4)$$

Incidentally, in the case where a relation between a travel speed v5 of the probe vehicle PC traveling at the position P7 at the time t2 and the absolute speed v4 of another vehicle OC1 traveling at the position P9 at the time t2 is v4 > v5, the relative speed calculator 206 may not be able to calculate the relative speed of another vehicle OC1 relative to the probe vehicle PC at the time after the time t2 because the inter-vehicle distance between the probe vehicle PC and another vehicle OC1 is increased due to the speed difference. Furthermore, when another vehicle OC2 traveling behind the probe vehicle PC at the time t2 enters the view angles of the imaging units 101 and 102 at the time after the time t2, there is possibility that another vehicle may be changed.

Additionally, in the case where a relation between the travel speed v5 of the probe vehicle PC traveling at the position P7 at the time t2 and the absolute speed v4 of another vehicle OC1 traveling at the position P9 at the time t2 is v4 < v5, the relative speed calculator 206 may not be able to calculate the relative speed of another vehicle OC1 relative to the probe vehicle PC at the time after the time t2 because the probe vehicle PC overtakes another vehicle OC1 at the time after the time t2 due to the speed difference. Furthermore, another vehicle may be changed by a fact that another vehicle having traveled ahead of another vehicle OC1 at the time t2 enters the view angles of the imaging units 101 and 102 at the time after the time t2.

Thus, in the case where there is a speed difference between a travel speed of the probe vehicle and an absolute speed of another vehicle, another vehicle is changed. Additionally, in the case where change of another vehicle cannot be detected, an inter-vehicle distance is largely changed between before and after change of another vehicle, and a relative speed calculated by the relative speed calculator 206 is also largely changed. Therefore, it is necessary to calculate a relative speed of another vehicle relative to the probe vehicle after determining whether another vehicle has suddenly accelerated or suddenly decelerated or whether another vehicle is changed.

Considering above, in the present embodiment, the vehicle change determination unit 204 determines change of another vehicle based on a frame at a former time and a frame at a latter time as described above. Then, in the case of determining that another vehicle is changed, the vehicle change determination unit 204 inhibits the absolute speed calculator 208 from calculating an absolute speed of another vehicle based on a relative speed calculated based on a former inter-vehicle distance and a latter inter-vehicle distance.

Specifically, the image processor 202 performs image processing on the frames at the time t0, t1, and t2 to detect a lane and a vehicle included in the frames. As illustrated in FIG. 3, the inter-vehicle distance analysis unit 203 calculates the inter-vehicle distances d0, d1, and d2 between the probe vehicle PC and another vehicle OC1 at the time t0, t1, and t2 based on the detection result of the lane and the vehicle by the image processor 202.

Then, the relative speed calculator 206 calculates, as a relative speed V at the time t1, a value obtained by dividing a difference between the inter-vehicle distance d0 at the time t0 and the inter-vehicle distance d1 at the time t1 by a difference between the time t0 and the time t1 as described above. The relative speed calculator 206 also calculates a relative speed V at the time t2 in the similar manner. In the present embodiment, described is an example of calculating a relative speed V in every 100 msec that is an exemplary predetermined period, but the relative speed V may also be calculated in every shorter period. However, since it is difficult to calculate an inter-vehicle distance shorter than a threshold of an inter-vehicle distance that can be calculated based on one pixel of a captured image obtained by imaging by each of the imaging units 101 and 102, the relative speed V is preferably calculated in every predetermined period during which the inter-vehicle distance is changed by the threshold or more.

Next, the vehicle change determination unit 204 determines change of another vehicle in every predetermined period based on whether there is continuity in change of the inter-vehicle distance or the relative speed. In other words, the vehicle change determination unit 204 determines change of another vehicle based on temporal change of the inter-vehicle distance or the relative speed. Specifically, the vehicle change determination unit 204 determines change of another vehicle based on a difference between a former inter-vehicle distance and a latter inter-vehicle distance, or a difference between a relative speed at the former time and a relative speed at the latter time. For example, when the difference between the former inter-vehicle distance and the latter inter-vehicle distance, or the difference between the relative speed at the former time and the relative speed at the latter time exceeds a predetermined threshold, the vehicle change determination unit 204 determines that another vehicle is changed. Then, in the case of determining that another vehicle is changed, the vehicle change determination unit 204 inhibits the absolute speed calculator 208 from calculating an absolute speed based on the relative speed calculated based on the former inter-vehicle distance and the latter inter-vehicle distance.

Here, the predetermined threshold is an inter-vehicle distance or a relative speed changed during the predetermined period due to realistic acceleration and deceleration of a vehicle. For example, assuming a case where the probe vehicle decelerates and another vehicle accelerates, the predetermined threshold is a value obtained by adding a margin to an inter-vehicle distance or a relative speed changed during the predetermined period in the case where another vehicle accelerates or decelerates at an acceleration twice a preset speed (such as a legal speed). Alternatively, the predetermined threshold may be an inter-vehicle distance or a relative speed changed during the predetermined period in the case where another vehicle accelerates or decelerates at an acceleration at which change of another vehicle hardly occurs.

Additionally, the vehicle change determination unit 204 determines that another vehicle is changed in the case where another vehicle cannot be detected even for a second from a frame constituting a moving image and an inter-vehicle distance cannot be calculated from the frame. In other words, the vehicle change determination unit 204 determines change of another vehicle based on whether the inter-vehicle distance can be calculated based on the frame constituting the moving image. Specifically, in the case where another vehicle cannot be detected from a frame at certain time and an inter-vehicle distance cannot be calculated, the vehicle change determination unit 204 inhibits the absolute speed calculator 208 from calculating an absolute speed based on a relative speed calculated based on an inter-vehicle distance at the certain time.

Additionally, the inter-vehicle distance analysis unit 203 calculates an inter-vehicle distance between the probe vehicle (e.g., the probe vehicle PC illustrated in FIG. 3) and the preceding vehicle (e.g., the preceding vehicle AC illustrated in FIG. 3) based on a lane and a vehicle detected from each of the frames (e.g., frames at time t0, t1, and t2 illustrated in FIG. 3) by the image processor 202. Furthermore, the relative speed calculator 206 calculates a relative speed of the preceding vehicle relative to the probe vehicle based on the inter-vehicle distance between the probe vehicle and the preceding vehicle at former time and the inter-vehicle distance between the probe vehicle and the preceding vehicle at latter time in a manner similar to the relative speed of another vehicle relative to the probe vehicle. Then, the absolute speed calculator 208 also calculates a travel speed of the preceding vehicle based on a travel speed of the probe vehicle detected by the vehicle speed detector 207 and the relative speed of the preceding vehicle relative to the probe vehicle in a manner similar to another the absolute speed of another vehicle. At this point, the vehicle change determination unit 204 determines change of the preceding vehicle based on the frame at the former time and the frame at the latter time in a manner similar to determination on change of another vehicle. Then, in the case of determining that the preceding vehicle is changed, the vehicle change determination unit 204 inhibits the absolute speed calculator 208 from calculating the travel speed of the preceding vehicle based on a relative speed calculated based on an inter-vehicle distance between the probe vehicle and the preceding vehicle at former time and an inter-vehicle distance between the probe vehicle and the preceding vehicle at latter time.

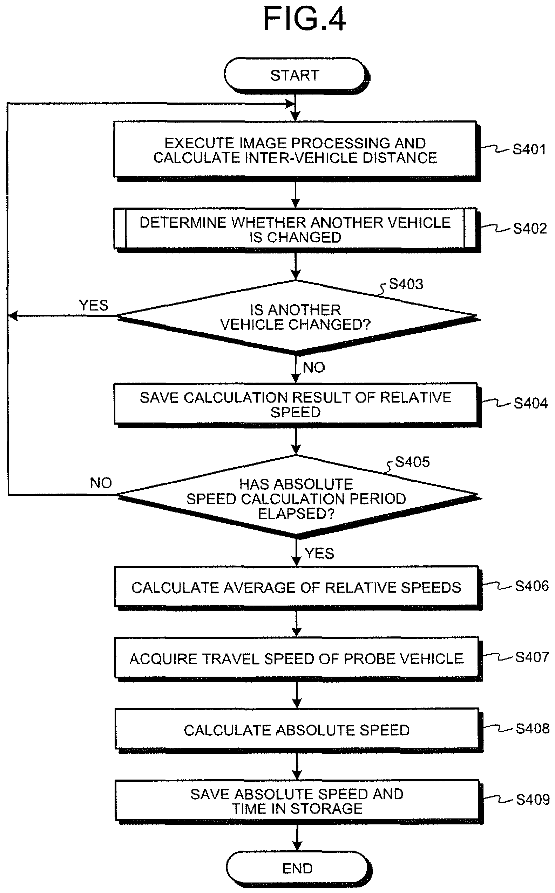

Next, an exemplary flow of absolute speed calculation processing for another vehicle by the in-vehicle device 100 according to the present embodiment will be described using FIG. 4. FIG. 4 is a flowchart illustrating the exemplary flow of the absolute speed calculation processing for another vehicle by the in-vehicle device according to the present embodiment.

When a command to calculate an absolute speed of another vehicle is received from an external device, the image processor 202 performs image processing for a frame (herein after referred to as a processing target frame) at certain time (hereinafter referred to as processing target time) out of frames constituting a moving image acquired by the camera image acquisition unit 201, and detects a lane and a vehicle included in the processing target frame (step S401). Furthermore, the inter-vehicle distance analysis unit 203 calculates an inter-vehicle distance between the probe vehicle and another vehicle based on the lane and the vehicle detected by the image processor 202 from the processing target frame (step S401).

Next, the vehicle change determination unit 204 determines change of another vehicle based on an inter-vehicle distance at former time by a predetermined period from the processing target time and an inter-vehicle distance at latter time that is the processing target time (Step S402). In the case of determining that another vehicle is changed (step S403: Yes), the vehicle change determination unit 204 controls the relative speed calculator 206 and returns to step S401 without saving, in the storage 209, a relative speed calculated based on the inter-vehicle distance at the former time and the inter-vehicle distance at the processing target time. Thus, the vehicle change determination unit 204 inhibits the absolute speed calculator 208 from calculating an absolute speed of another vehicle based on the relative speed calculated based on the inter-vehicle distance at the former time and the inter-vehicle distance at the processing target time. On the other hand, in the case of determining that another vehicle is not changed (step S403: No), the relative speed calculator 206 saves the calculated relative speed in the storage 209 (step S404).

After that, the image processor 202 determines whether a specific period (hereinafter referred to as an absolute speed calculation period) has elapsed from reception of the calculation command or latest calculation of the absolute speed of another vehicle (Step S405). In the case of determining that the absolute speed calculation period has not elapsed (step S405: No), the image processor 202 returns to step S401 and performs image processing for a frame at the processing target time after the predetermined period. On the other hand, in the case of determining that the absolute speed calculation period has elapsed (step S405: Yes), the relative speed calculator 206 calculates an average of relative speeds while excluding a certain relative speed from relative speeds at respective time calculated within the absolute speed calculation period (examples of relative speed calculation history) among relative speeds stored in the storage 209 (step S406). The certain relative speed has an error equal to or more than a predetermined error relative to a preset relative speed.

Alternatively, the relative speed calculator 206 may also calculate a standard deviation of a relative speed while excluding a certain relative speed from the relative speeds at the respective time calculated within the absolute speed calculation period. The certain relative speed has an error equal to or more than a predetermined error relative to a preset relative speed. Alternatively, the relative speed calculator 206 may also calculate an approximate straight line indicating temporal change of a relative speed while excluding a certain relative speed from the relative speeds at the respective time calculated within the absolute speed calculation period. The certain relative speed has an error equal to or more than a predetermined error relative to a preset relative speed.

Next, the relative speed calculator 206 acquires, from the vehicle speed detector 207, travel speeds of the probe vehicle at respective time within the absolute speed calculation period (step S407). Then, the relative speed calculator 206 calculates, for each time within the absolute speed calculation period, a speed obtained by adding a relative speed at concerned time to a travel speed of the probe vehicle at the concerned time as an absolute speed of another vehicle at the concerned time (step S408). Furthermore, the absolute speed calculator 208 saves each time and an absolute speed of another vehicle at concerned time in the storage 209 in a correlated manner (step S409).

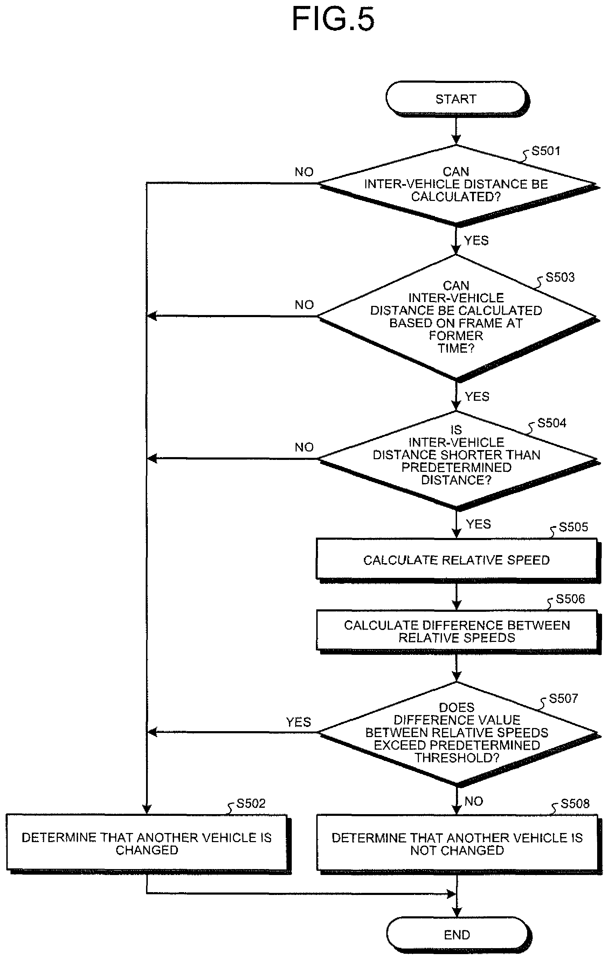

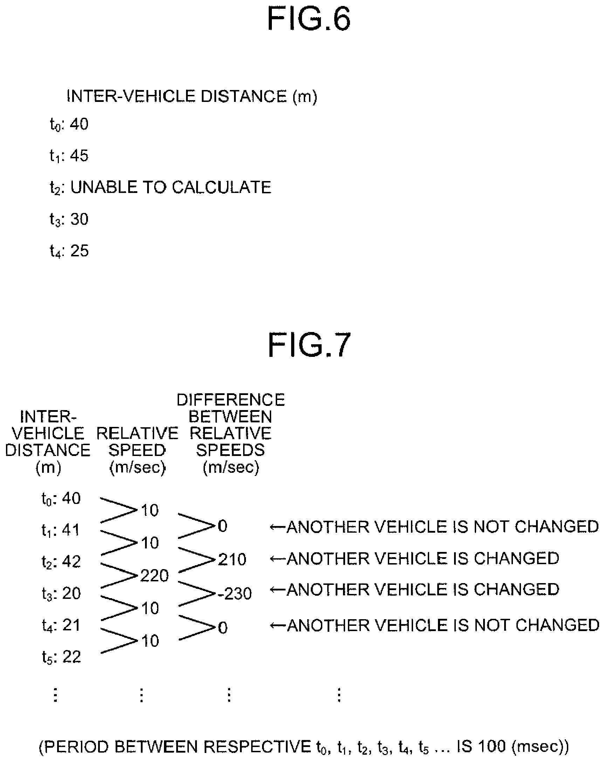

Next, an exemplary flow of determination processing on change of another vehicle in step S402 of FIG. 4 will be described using FIGS. 5 and 6. FIG. 5 is a flowchart illustrating an exemplary flow of determination processing on change of another vehicle, performed by the in-vehicle device according to the present embodiment. FIG. 6 is an explanatory diagram for the exemplary determination processing on change of another vehicle, performed by the in-vehicle device according to the present embodiment.

When the inter-vehicle distance calculation processing is performed in step S401 of FIG. 4, the vehicle change determination unit 204 determines whether the inter-vehicle distance can be calculated based on the processing target frame (step S501). In the case where the inter-vehicle distance cannot be calculated based on the processing target frame (step S501: No), the vehicle change determination unit 204 determines that another vehicle is changed (step S502). For example, as illustrated in FIG. 6, the inter-vehicle distance calculation processing is performed at each time t0, t1, t2, and the like in every predetermined period (for example, 100 msec), and in the case where the inter-vehicle distance cannot be calculated at the time t2, the vehicle change determination unit 204 determines that another vehicle is changed between the time t1 and the time t2.

On the other hand, in the case where the inter-vehicle distance can be calculated based on the processing target frame (step S501: Yes), the vehicle change determination unit 204 determines whether the inter-vehicle distance can be calculated based on a frame at former time earlier by the predetermined period from the processing target time (Step S503). In the case of determining that the inter-vehicle distance cannot be calculated based on a frame at the former time (step S503: No), the vehicle change determination unit 204 determines that another vehicle is changed between the frame at the former time and the processing target frame (step S502).

On the other hand, in the case of determining that the inter-vehicle distance can be calculated based on the frame at the former time (step S503: Yes), the vehicle change determination unit 204 determines whether the calculated inter-vehicle distance is shorter than a predetermined distance (Step S504). Here, the predetermined distance is a threshold value of the inter-vehicle distance at which an error of the inter-vehicle distance calculated based on a frame is within a preset error. Then, in the case where the calculated inter-vehicle distance is the predetermined distance or longer (step S504: No), the vehicle change determination unit 204 determines that another vehicle is changed between the frame at the former time and the processing target frame (Step S502). Furthermore, in the case where the calculated inter-vehicle distance is shorter than the predetermined distance (step S504: Yes), the relative speed calculator 206 calculates a relative speed of another vehicle relative to the probe vehicle based on: the inter-vehicle distance calculated based on the frame at the former time; and the inter-vehicle distance calculated based on the processing target frame (Step S505). Next, the vehicle change determination unit 204 calculates a difference between the relative speed of another vehicle relative to the probe vehicle at the former time and the relative speed of another vehicle relative to the probe vehicle at the processing target time (step S506). Subsequently, the vehicle change determination unit 204 determines whether the calculated difference exceeds a predetermined threshold (step S507).

In the case where the difference between the relative speed at the former time and the relative speed at the processing target time exceeds the predetermined threshold (step S507: Yes), the vehicle change determination unit 204 determines that another vehicle is changed (Step S502). On the other hand, in the case where the difference between the relative speed at the former time and the relative speed at the processing target time is less than the predetermined threshold (step S507: No), the vehicle change determination unit 204 determines that another vehicle is not changed (Step S508).

FIG. 7 is an explanatory diagram for an exemplary determination processing on change of another vehicle, performed by an in-vehicle device according to the present embodiment. Here, as illustrated in FIG. 7, it is assumed that an inter-vehicle distance between the probe vehicle and another vehicle at time t0 is 40 m, the inter-vehicle distance between the probe vehicle and another vehicle at time t1 after a predetermined period (e.g., 100 msec) from time t0 is 41 m, the inter-vehicle distance between the probe vehicle and another vehicle at time t2 after the predetermined period from the time t1 is 42 m, the inter-vehicle distance between the probe vehicle and another vehicle at time t3 after the predetermined period from the time t2 is 20 m, the inter-vehicle distance between the probe vehicle and another vehicle at time t4 after the predetermined period from the time t3 is 21 m, and the inter-vehicle distance between the probe vehicle and another vehicle at time t5 after the predetermined period from time the t4 is 22 m.

Then, the relative speed calculator 206 calculates a relative speed between the probe vehicle and another vehicle at each of the time t0, t1, t2, and the like based on a frame at each of the time t0, t1, t2, and the like constituting a moving image. Then, as illustrated in FIG. 7, the vehicle change determination unit 204 determines that another vehicle is not changed from the time t0 to the time t2 because a difference of 0 m/sec between the relative speed at the time t1 of 10 m/sec and the relative speed at the time t2 of 10 m/sec is the predetermined threshold (e.g., 10 m/sec) or less.

Additionally, as illustrated in FIG. 7, the vehicle change determination unit 204 determines that another vehicle is changed from the time t2 to the time t3 because the difference of 210 m/sec between the relative speed at the time t2 of 10 m/sec and the relative speed at the time t3 of 220 m/sec exceeds the predetermined threshold. In a similar manner, whether another vehicle is changed is determined for time after the time t3.

As described above, according to the in-vehicle device 100 included in the probe vehicle according to the present embodiment, calculation accuracy of an absolute speed of another vehicle can be improved because it is possible to prevent an absolute speed of another vehicle from being calculated based on a relative speed calculated with different another vehicle.

Additionally, in the present embodiment, the vehicle change determination unit 204 can exclude an inter-vehicle distance equal to or longer than the predetermined distance among inter-vehicle distances calculated based on frames from an inter-vehicle distance used to calculate a relative speed. An inter-vehicle distance calculated based on a frame tends to have a larger error when a distance from the probe vehicle to another vehicle is longer than a specific distance. Therefore, in the present embodiment, the vehicle change determination unit 204 functions as a filter that excludes, from the inter-vehicle distance used for calculation of a relative speed by the relative speed calculator 206, an inter-vehicle distance equal to or longer than a predetermined distance (such as 50 m) among the inter-vehicle distances calculated by the inter-vehicle distance analysis unit 203. Consequently, calculation accuracy of the absolute speed can be further improved because it is possible to prevent an absolute speed from being calculated based on an inter-vehicle distance equal to or longer than the predetermined distance.

Additionally, in the present embodiment, the in-vehicle device 100 transmits, to a center server (example of an external server), an absolute speed of another vehicle at each time saved in the storage 209 and a travel speed of the probe vehicle via a network such as the Internet. Here, the center server includes a navigation system adapted to calculate, for each lane, a travel period required for a vehicle to travel to a destination, and create a course change command to change a lane in which the travel period is minimized. Consequently, calculation accuracy of the travel period can be improved and a more appropriate course change command can be created because the travel period can be calculated and the course change command can be created based on an absolute speed of another vehicle calculated with high accuracy.

Furthermore, in the present embodiment, the in-vehicle device 100 may transmit an absolute speed of another vehicle at each time saved in the storage 209 to the center server in every preset period. Alternatively, the in-vehicle device 100 may transmit an average of absolute speeds of another vehicle at each time saved in the storage 209 to the center server in every preset period.

Additionally, in the present embodiment, the in-vehicle device 100 may transmit an absolute speed of another vehicle at each time saved in the storage 209 to the center server in every preset period after adding lane identification information that can identify an adjacent lane where concerned another vehicle travels. Consequently, the center server can identify a travel speed of a vehicle in each of lanes on a road where the probe vehicle travels. Moreover, in the present embodiment, the in-vehicle device 100 can also transmit an absolute speed of a preceding vehicle to the center server in a manner similar to the absolute speed of another vehicle.

Furthermore, in the present embodiment, in the case where an absolute speed of another vehicle calculated by the absolute speed calculator 208 is a negative value, the vehicle change determination unit 204 determines that another vehicle travels in an opposite direction in the adjacent lane.

Additionally, in the present embodiment, the camera image acquisition unit 201, image processor 202, inter-vehicle distance analysis unit 203, vehicle change determination unit 204, time management unit 205, relative speed calculator 206, vehicle speed detector 207, and absolute speed calculator 208 are implemented in the in-vehicle device 100 as described above, but not limited thereto. For example, the external server may calculate an absolute speed of another vehicle by implementing, in the external server, the camera image acquisition unit 201, image processor 202, inter-vehicle distance analysis unit 203, vehicle change determination unit 204, time management unit 205, relative speed calculator 206, vehicle speed detector 207, and absolute speed calculator 208.

Note that a program executed by the in-vehicle device 100 of the present embodiment is provided by being preliminarily incorporated in a read only memory (ROM) or the like. The program executed by the in-vehicle device 100 of the present embodiment may also be provided by being recorded in a computer-readable recording medium such as a CD-ROM in a file of an installable format or an executable format, a flexible disk (FD), CD-R, or a digital versatile disk (DVD).

Furthermore, the program executed by the in-vehicle device 100 of the present embodiment may be stored on a computer connected to a network such as the Internet and provided by being downloaded via the network. Also, the program executed by the in-vehicle device 100 of the present embodiment may also be provided or distributed via a network such as the Internet.

The program executed by the in-vehicle device 100 according to the present embodiment has a module configuration including the above-described respective units (the camera image acquisition unit 201, image processor 202, inter-vehicle distance analysis unit 203, vehicle change determination unit 204, time management unit 205, relative speed calculator 206, vehicle speed detector 207, and absolute speed calculator 208), and as actual hardware, the above respective units are loaded on a main storage device by a central processing unit (CPU) reading the program from the ROM, and the camera image acquisition unit 201, image processor 202, inter-vehicle distance analysis unit 203, vehicle change determination unit 204, time management unit 205, relative speed calculator 206, vehicle speed detector 207, and absolute speed calculator 208 are generated on the main storage device.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A travel speed calculation device comprising:

   an acquisition unit (201, 207) that acquires probe information including: a moving image obtained by imaging a periphery of a probe vehicle by imaging units (101, 102) included in the probe vehicle; and a travel speed of the probe vehicle;
   an inter-vehicle distance calculator (202, 203) that calculates, based on a frame constituting the moving image, an inter-vehicle distance between the probe vehicle and another vehicle traveling in another lane adjacent to a lane where the probe vehicle travels;
   a relative speed calculator (206) that calculates a relative speed of another vehicle relative to the probe vehicle based on: a former inter-vehicle distance calculated based on the frame at former time; and a latter inter-vehicle distance calculated based on the frame at latter time after elapse of a predetermined period from the former time;
   a travel speed calculator (208) that calculates a travel speed of another vehicle based on a travel speed of the probe vehicle and the relative speed; and
   a determination unit (204) that determines change of another vehicle based on the frame at the former time and the frame at the latter time and inhibits the travel speed calculator (208) from calculating a travel speed of another vehicle based on the relative speed in the case where another vehicle is changed.

2. The device according to claim 1, wherein the determination unit (204) determines change of another vehicle based on temporal change of the inter-vehicle distance or the relative speed.

3. The device according to claim 1, wherein the determination unit (204) determines change of another vehicle based on whether the inter-vehicle distance can be calculated based on the frame.

4. The device according to claim 1, wherein the determination unit (204) further excludes, from an inter-vehicle distance used to calculate the relative speed, an inter-vehicle distance equal to or longer than a predetermined distance among the calculated inter-vehicle distances.

5. The device according to claim 1, wherein the travel speed calculator (208) calculates an average of the calculated relative speed, a standard deviation of the calculated relative speed, or an approximate straight line indicating temporal change of the calculated relative speed while excluding, from the calculated relative speed, a relative speed which has an error equal to or more than a predetermined error relative to a preset relative speed.

6. The device according to claim 1, wherein in the case where the travel speed of another vehicle is negative, the determination unit (204) further determines that another vehicle travels in an opposite direction.

7. A travel speed calculation method comprising:

   acquiring probe information including: a moving image obtained by imaging a periphery of a probe vehicle by imaging units (101, 102) included in the probe vehicle; and a travel speed of the probe vehicle;
   calculating, based on a frame constituting the moving image, an inter-vehicle distance between the probe vehicle and another vehicle traveling in another lane adjacent to a lane where the probe vehicle travels;
   calculating a relative speed of another vehicle relative to the probe vehicle based on: a former inter-vehicle distance calculated based on the frame at former time; and a latter inter-vehicle distance calculated based on the frame at latter time after elapse of a predetermined period from the former time;
   calculating a travel speed of another vehicle based on a travel speed of the probe vehicle and the relative speed;
   determining change of another vehicle based on the frame at the former time and the frame at the latter time; and
   inhibiting calculation of a travel speed of another vehicle based on the relative speed in the case where another vehicle is changed.

8. The method according to claim 7, wherein change of another vehicle is determined based on temporal change of the inter-vehicle distance or the relative speed.

9. The method according to claim 7, wherein change of another vehicle is determined based on whether

**EP 3 306 588 A2**

the inter-vehicle distance can be calculated based on the frame.

10. The method according to claim 7, wherein an inter-vehicle distance equal to or longer than a predetermined distance among the calculated inter-vehicle distances is excluded from an inter-vehicle distance used to calculate the relative speed.

11. The method according to claim 7, wherein an average of the calculated relative speed, a standard deviation of the calculated relative speed, or an approximate straight line indicating temporal change of the calculated relative speed is calculated while excluding, from the calculated relative speed, a relative speed which has an error equal to or more than a predetermined error relative to a preset relative speed.

12. The method according to claim 7, wherein in the case where the travel speed of another vehicle is negative, it is determined that another vehicle travels in an opposite direction.

# FIG.1

# FIG.2

# FIG.3

TIME t0

TIME t1

TIME t2

EP 3 306 588 A2

# FIG.4

```
        START
          │
          ▼
┌──────────────────────────────┐
│ EXECUTE IMAGE PROCESSING AND │───S401
│ CALCULATE INTER-VEHICLE       │
│ DISTANCE                      │
└──────────────────────────────┘
          │
          ▼
┌──────────────────────────────┐
│ DETERMINE WHETHER ANOTHER     │───S402
│ VEHICLE IS CHANGED            │
└──────────────────────────────┘
          │
          ▼
       ╱S403
  YES ◁──── IS ANOTHER
            VEHICLE CHANGED?
          │ NO
          ▼
┌──────────────────────────────┐
│ SAVE CALCULATION RESULT OF    │───S404
│ RELATIVE SPEED                │
└──────────────────────────────┘
          │
          ▼
       ╱S405
  NO ◁──── HAS ABSOLUTE
           SPEED CALCULATION PERIOD
           ELAPSED?
          │ YES
          ▼
┌──────────────────────────────┐
│ CALCULATE AVERAGE OF RELATIVE │───S406
│ SPEEDS                        │
└──────────────────────────────┘
          │
          ▼
┌──────────────────────────────┐
│ ACQUIRE TRAVEL SPEED OF       │───S407
│ PROBE VEHICLE                 │
└──────────────────────────────┘
          │
          ▼
┌──────────────────────────────┐
│ CALCULATE ABSOLUTE SPEED      │───S408
└──────────────────────────────┘
          │
          ▼
┌──────────────────────────────┐
│ SAVE ABSOLUTE SPEED AND       │───S409
│ TIME IN STORAGE               │
└──────────────────────────────┘
          │
          ▼
        END
```

# FIG.5

```
                    START

              S501
         CAN
NO    INTER-VEHICLE DISTANCE BE
         CALCULATED?
              YES

              S503
         CAN
         INTER-VEHICLE
NO    DISTANCE BE CALCULATED
         BASED ON FRAME AT
         FORMER
         TIME?
              YES

              S504
         IS
         INTER-VEHICLE
NO    DISTANCE SHORTER THAN
         PREDETERMINED
         DISTANCE?
              YES

              S505
     CALCULATE RELATIVE SPEED

              S506
     CALCULATE DIFFERENCE BETWEEN
         RELATIVE SPEEDS

              S507
         DOES
         DIFFERENCE VALUE
YES   BETWEEN RELATIVE SPEEDS
         EXCEED PREDETERMINED
         THRESHOLD?
              NO

    S502                        S508
DETERMINE THAT ANOTHER VEHICLE IS    DETERMINE THAT ANOTHER VEHICLE IS
         CHANGED                         NOT CHANGED

                    END
```

# FIG.6

INTER-VEHICLE DISTANCE (m)

$t_0$: 40

$t_1$: 45

$t_2$: UNABLE TO CALCULATE

$t_3$: 30

$t_4$: 25

# FIG.7

| INTER-VEHICLE DISTANCE (m) | RELATIVE SPEED (m/sec) | DIFFERENCE BETWEEN RELATIVE SPEEDS (m/sec) | |
|---|---|---|---|
| $t_0$: 40 | | | |
| | 10 | | |
| $t_1$: 41 | | 0 | ←ANOTHER VEHICLE IS NOT CHANGED |
| | 10 | | |
| $t_2$: 42 | | 210 | ←ANOTHER VEHICLE IS CHANGED |
| | 220 | | |
| $t_3$: 20 | | -230 | ←ANOTHER VEHICLE IS CHANGED |
| | 10 | | |
| $t_4$: 21 | | 0 | ←ANOTHER VEHICLE IS NOT CHANGED |
| | 10 | | |
| $t_5$: 22 | | | |
| ⋮ | ⋮ | ⋮ | ⋮ |

(PERIOD BETWEEN RESPECTIVE $t_0$, $t_1$, $t_2$, $t_3$, $t_4$, $t_5$ ... IS 100 (msec))